Europäisches Patentamt

European Patent Office

Office européen des brevets

(11) Publication number: **0 047 815**
**B1**

# (12) EUROPEAN PATENT SPECIFICATION

(45) Date of publication of patent specification: **19.09.84**

(21) Application number: **81104363.7**

(22) Date of filing: **05.06.81**

(51) Int. Cl.³: **C 04 B 35/46,** H 01 G 4/12,
H 01 B 3/12

(54) **Grain boundary layer dielectric ceramic compositions.**

(30) Priority: **20.08.80 JP 115244/80**

(43) Date of publication of application:
**24.03.82 Bulletin 82/12**

(45) Publication of the grant of the patent:
**19.09.84 Bulletin 84/38**

(84) Designated Contracting States:
**DE FR GB**

(56) References cited:
**EP-A-0 038 044
GB-A-2 026 466
GB-A-2 105 977
US-A-4 143 207**

(73) Proprietor: **Matsushita Electric Industrial Co.,
Ltd.
1006, Oaza Kadoma
Kadoma-shi Osaka-fu, 571 (JP)**

(72) Inventor: **Matsuo, Yoshihiro
27-4, Ishizu Higashimachi
Neyagawa-shi Osaka (JP)**
Inventor: **Itakura, Gen
5-2-317, Makino Kitamachi
Hirakata-shi Osaka (JP)**
Inventor: **Ikebe, Shoichi
20530, Oaza Shimotajima
Sadohara-cho Miyazaki-gun Miyazaki (JP)**
Inventor: **Wada, Tatsuya
Shoukyu-ryo, 52
Ookubo-cho 4-chome Moriguchi-shi Osaka (JP)**
Inventor: **Fujimura, Masanori
11412, Aza Egawazaki Oaza Shimotajima
Sadohara-cho
Miyazaki-gun Miyazaki 880-02 (JP)**

(74) Representative: **Berg, Wilhelm, Dr. et al
Dr. Berg, Dipl.-Ing. Stapf, Dipl.-Ing. Schwabe, Dr.
Dr. Sandmair Mauerkircherstrasse 45
D-8000 München 80 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

## BACKGROUND OF THE INVENTION

The present invention relates to materials for capacitors; that is, grain boundary layer dielectric ceramic compositions in which diffusing agents mainly consisting of $Bi_2O_3$ and $Cu_2O$ are thermally diffused into the grain boundaries of a semiconductive ceramic mainly consisting of $SrTiO_3$ or the solid solution of $Sr_{1-x}Ca_xTiO_3$ so that the dielectric layers are formed in the grain boundaries.

The grain boundary layer dielectric ceramic compositions which are used for the manufacture of capacitors comprise a semiconductive ceramic composition and a diffusing composition which renders the grain boundaries of the semiconductive ceramic composition to have a high resistance and which forms the dielectric layers in the grain boundaries. The characteristics of capacitors, therefore, are dependent upon the selection of the semiconductive ceramic compositions and the diffusing compositions.

The semiconductive ceramic compositions in accordance with the present invention mainly consists of $SrTiO_3$ containing $Nb_2O_5$ and optionally $SiO_2$ or of the solid solution of $Sr_{1-x}Ca_xTiO_3$ containing $Nb_2O_5$ and optionally $SiO_2$. The semiconductive ceramic compositions consisting of $SrTiO_3$ containing $Nb_2O_5$ are well known in the art as disclosed in Japanese Laid-Open Patent Application No. 129896/1974, but as the diffusing agents or compositions which are diffused into the grain boundaries of such semiconductive ceramic compositions so as to form the dielectric layers, only $Bi_2O_3$ (as disclosed in Japanese Laid-Open Patent Application No. 129896/1974) and the compositions consisting of $Nb_2O_5$ and $ZnO$ (as disclosed in Japanese Laid-Open Patent Application No. 8099/1975) are used. A grain-boundary diffusing agent consisting of $Bi_2O_3$, $Cu_2O$ and $MnO_2$ is disclosed in Japanese Laid-Open Patent Application No. 78494/1979 and used in the production of semiconductive ceramic compounds of strontium titanate containing manganese oxide and niobium oxide or their solid solutions. Such semiconductive ceramic compounds are different from those in accordance with the present invention. A four-component-system boundary grain diffusing agent consisting of $Bi_2O$, $Cu_2O$, $MnO_2$ and $Li_2O$ is also disclosed in Japanese Laid-Open Patent Application No. 111698/1979 and used in the production of semiconductive ceramic compounds of strontium titanate containing bismuth oxide and niobium oxide. Such ceramic compounds are also different from those of the present invention.

US—A—4 143 207 discloses ceramic grains consisting of $SrTiO_3$ which contains 0.1 to 2 mol% $Nb_2O_5$, which grains are surrounded by grain boundary layer dielectric materials comprising at least two of the materials $Cu_2O$, $Bi_2O_3$, $MnO_2$ and $LiCO_3$ or four such materials maximum. The highest dielectric constants are in the order of 46 000 when all four components are simultaneously used.

GB—A—2 015 977 discloses similar compositions on the basis of $SrTiO_3$ containing $Nb_2O_5$ and 0.1 to 2 mol% $SiO_2$ which are prepared by employing a four component system comprising $CuO$, $MnO_2$, $Bi_2O_3$ and $PbO$. The ceramics obtained belong to a class of materials having dielectric constants in the order of 5000 to 15 000.

GB—A—2 026 466 discloses semiconductive ceramic compositions on the basis of $SrTiO_3/CaTiO_3$ containing $Nb_2O_5$, which are formed with $B_2O_3$ as diffusion agent, optionally in admixture with $Cu_2O$. The dielectric constants obtained are within a range from 1000 to 3500.

Based on the variations in electrostatic capacitance due to temperature variations, grain boundary layer dielectric ceramic caapacitor elements are rated as YD, YB and YA. That is, the capacitor elements which have the temperature coefficient of capacitance of $\pm20\%$ between $+85°C$ and $-25°C$ based on the capacitance of $20°C$ are rated as YD. Those which have the temperature coefficient of $\pm10\%$ are rated as YB and those which have the temperature coefficient of $\pm5\%$ are rated as YA. Regardless of their ratings, all the capacitor elements preferably have a high dielectric constant $\varepsilon_a$, a high dielectric breakdown voltage $V_b$ and a low dielectric loss tan $\delta$. In practice, the YD rated capacitor elements must have the dielectric constant $\varepsilon_a$ of higher than 35,000, the dielectric breakdown voltage $V_b$ of higher than 500 V/mm and the dielectric loss tan $\delta$ of less than 0.01. The YB rated capacitor elements must have the dielectric constant $\varepsilon_a$ of higher than 20,000, the dielectric breakdown voltage $V_b$ of higher than 700 V/mm and the dielectric loss tan $\delta$ of less than 0.01. The YA rated capacitor elements must have the dielectric constant $\varepsilon_a$ of higher than 5000, the dielectric breakdown voltage $V_b$ of higher than 700 V/mm and the dielectric loss tan $\delta$ of less than 0.01.

## DESCRIPTION OF THE INVENTION

The grain boundary layer dielectric ceramic capacitors in accordance with the present invention can satisfy all the characteristics required in practice. The semiconductive ceramic compositions which are especially recommended for the fabrication of YD rated ceramic capacitor elements consist of from 50.23 to 49.47 mol% of SrO, from 49.72 to 50.23 mol% of $TiO_3$ and from 0.05 to 0.3 mol% of $Nb_2O_5$ or mainly consist of the above-described constituents and contain less than 0.2 mol parts of $SiO_2$ based on 100 mol parts of the main constituents. The semiconductive ceramic compositions for YB rated ceramic capacitor elements consist of from 50.23 to 34.67 mol% of SrO and equal to or less than 14.8 mol% of CaO, the contents of the constituents SrO and CaO being from 50.23 to 49.47 mol%, from 49.72 to 50.23 mol% of $TiO_2$ and from 0.05 to 0.3 mol% of $Nb_2O_5$ or mainly consist of the above-described constituents. The semiconductive ceramic compositions for YA rated capacitor elements consist of from 35.43 to 26.87 mol% of SrO, from 14.8 to 22.6 mol% of CaO, the contents of the constituents SrO and CaO being from 50.23 to 49.47 mol%, from 49.72 to 50.23 mol% of $TiO_2$ and from 0.05 to 0.3 mol% of $Nb_2O_5$, or mainly consist of the above-described constituents and further contain less than 2 mol parts of $SiO_2$ based on 100 mol parts of the main constituents.

The semiconductive ceramic compositions in accordance with the present invention for YD, YB and YA rated capacitor elements contain from 0.05 to 0.3 mol% of $Nb_2O_5$. $Nb_2O_5$ is the constituent needed, based upon the principle of the valence control, to render $SrTiO_3$ consisting of SrO and $TiO_2$ or the solid solution of $Sr_{1-x}Ca_xTiO_3$ consisting of SrO, CaO and $TiO_2$ semiconductive. However, when the contents of $Nb_2O_5$ are less than 0.05 mol% (about 0.02 mol% based on the contents of $SrTiO_3$ or $Sr_{1-x}Ca_xTiO_3$), sufficient semiconductive properties cannot be attained in $SrTiO_3$ or the solid solution of $Sr_{1-x}Ca_xTiO_3$. On the other hand, when $Nb_2O_5$ exceeds 0.3 mol% (about 0.6 mol% based on the contents of $SrTiO_3$ or $Sr_{1-x}Ca_xTiO_3$), the grain growth of $SrTiO_3$ or $Sr_{1-x}Ca_xTiO_3$ is inhibited. In addition, the semiconductive ceramic compositions will have a high specific resistance. When the SrO constituent is substituted by the CaO constituent in $SrTiO_3$ which is the main constituent of semiconductive ceramic, the temperature coefficient of capacitance will be decreased with increase in contents of the CaO constituent and the grain sizes are in general reduced after sintering. When the CaO constituent exceeds 22.6 mol% (this corresponds almost to $Sr_{0.55}Ca_{0.45}TiO_3$) the grain size after sintering becomes less than 5 $\mu$m so that a minimum apparent dielectric constant $\varepsilon_a$ of 5000 cannot be attained. When the combined contents of SrO and CaO exceeds 50.23 mol% or when the $TiO_2$ constituent is less than 49.72 mol%, the grain size after sintering will become small, so that a minimum apparent dielectric constant $\varepsilon_a$ of 5000 cannot be attained. Furthermore, when the contents of SrO and CaO are less than 49.47 mol% or when $TiO_2$ exceeds 50.23 mol%, the grain size will become small, so that a minimum apparent dielectric constant $\varepsilon_a$ of 5000 cannot be attained. The reason is that when the SrO, CaO and $TiO_2$ constituents are present in excess of certain contents in $SrTiO_3$ or $Sr_{1-x}Ca_xTiO_3$, the grain growth is inhibited during sintering.

The $SiO_{2e}$ constituent has the effect of not only facilitating the semiconductive ceramic of $SrTiO_2$ or $Sr_{1-x}Ca_xTiO_3$ (so that the main sintering temperatures can be lowered) but also slightly lowering the dielectric loss tan $\delta$. However, when the $SiO_2$ constituent exceeds 2 mol parts based on 100 mol parts of the main composition consisting of three or four constituents of SrO, CaO, $TiO_2$ and $Nb_2O_5$, the grain growth is considerably inhibited, so that the average grain size of greater than 5 $\mu$m cannot be obtained. (That is, a minimum apparent dielectric constant $\varepsilon_a$ of 5000 cannot be attained).

The grain boundary diffusing agents in accordance with the present invention are characterized by consisting of a five component system on the basis of a first two component composition comprising 90 to 14.3 mol% of $Bi_2O_3$ and 10 to 85.7 mol% of $Cu_2O$, the components of this first system being partially substituted by an effective amount of $MnO_2$ is less than 4 mol%, an effective amount of $B_2O_3$ of less than 6 mol% and an effective amount of $Li_2O$ of less than 20 mol% and further in that the mixture contains at least 14.3 mol% of $Bi_2O_3$ and at least 10 mol% of $Cu_2O$.

The present invention is a further development of more recent studies with respect to the two component system $Bi_2O_3/Cu_2O$ providing the basis for the diffusing agents of the present invention. These studies revealed that when the contents of the $Bi_2O_3$ constituent is high in the grain boundaries after thermal diffusion, the dielectric constant $\varepsilon_a$ becomes high, but the dielectric breakdown voltage $V_b$ becomes low and the temperature coefficient of capacitance (between 85°C and —25°C) becomes high. On the other hand, when the $Cu_2O$ constituent is increased, the temperature coefficient of capacitance becomes low, the dielectric breakdown voltage $V_b$ becomes high and the dielectric constant $\varepsilon_a$ becomes low. With the $Bi_2O_3$ constituent in excess of 90 mol% or the $Cu_2O$ constituent less than 10 mol%, a minimum dielectric breakdown voltage $V_b$ of 500 V/mm cannot be attained. Furthermore, when the $Cu_2O$ constituent is in excess of 85.7 mol% or the $Bi_2O_3$ constituent is less than 14.3 mol%, the dielectric constant of higher than 5000 cannot be obtained. (This minimum dielectric constant cannot be attained even when semi-conductive ceramic has a relatively large average grain size of greater than about 20 $\mu$m).

The addition of the $MnO_2$ constituent results in the increase in dielectric breakdown voltage $V_b$, the slight increase in dielectric constant $\varepsilon_a$ and the increase in dielectric loss tan $\delta$. The contents of the $MnO_2$ constituent are less than 4 mol% because when the $MnO_2$ constituent exceeds 4 mol%, the dielectric loss tan $\delta$ of less than 0.01 cannot be obtained.

The addition of $B_2O_3$ to $Bi_2O_3$—$Cu_2O$ diffusing agents or compounds to $Bi_2O_3$—$Cu_2O$—$MnO_2$ systems results in the decrease in tan $\delta$, but is accompanied with the undesired decrease in $V_b$. When $B_2O_3$ exceeds 6 mol%, $V_b$ higher than 500 V/mm cannot be attained. Therefore, the content of $B_2O_3$ is less than 6 mol%. The addition of $Li_2O$ to two-, three- and four-component systems results in the increase in $\varepsilon_a$ without causing the increase in the temperature coefficient of capacitance, but when the content exceeds 20 mol%, $V_b$ decreases while tan $\delta$ increases. Especially because $V_b$ of higher than 500 V/mm cannot be attained, the content higher than 20 mol% is not used.

As described above, the grain boundary layer dielectric ceramic compositions in accordance with the present invention can completely satisfy the YD, YB and YA requirements. For instance, the present invention provides a YD rated capacitor element which has the temperature coefficient of capacitance of less than ±20%, the dielectric constant $\varepsilon_a$ of between 40,000 and 60,000, the dielectric breakdown

3

**O 047 815**

voltage $V_b$ of between 600 and 1300 and the dielectric loss tan $\delta$ of between 0.003 and 0.005. The present invention can also provide a YB rated capacitor element which has the temperature coefficient of capacitance of less than $\pm 10\%$, the dielectric constant $\varepsilon_a$ of between 20,000 and 35,000, the dielectric breakdown voltage $V_b$ of between 1,000 and 2,000 V/mm, and the dielectric loss tan $\delta$ of between 0.003 and 0.005. The present invention can further provide a YA rated capacitor element which has the temperature coefficient of capacitance of less than $\pm 5\%$, the dielectric constant $\varepsilon_a$ of between 7,000 and 20,000, the dielectric breakdown voltage $V_b$ of between 2,000 and 4,000 V/mm and the dielectric loss tan $\delta$ of between 0.003 and 0.005.

Next some examples will be described.

### Example 1

$SrCO_3$ powder (the purity of higher than 97.5%), $CaCO_3$ powder (the purity of higher than 98%), $TiO_2$ (anatase type, the purity of higher than 98.5%) and $Nb_2O_5$ powder (the purity of higher than 98%), all of which are for industrial use and available in the market), were proportioned as shown in TABLE 1 and mixed by a wet mixing process. After being dried, the semiconductive ceramic compositions were calcined at 1200°C and then crushed into the powder with the average grain size of 2.5 $\mu$m. An aqueous solution of polyvinyl alcohol was added as a binder. After being passed through a sieve of 32 mesh, the compositions were pressed under the pressure of about 98,7 N/mm² (one ton/cm²) into disks 15 mm in diameter and 0.5 mm in thickness. The disks were heat-treated in the air at 1000°C and then sintered at 1,390°C for four hours in the flow of the gas mixture consisting of 95% of $N_2$ and 5% of $H_2$, whereby the semiconductive ceramic disks about 12.5 mm in diameter and about 0.4 mm in thickness were obtained. The disk was then fractured and the fractured surface was polished and etched for observation though a microscope so as to measure the grain size. The results were shown also in TABLE 1. Even when the sintering temperature was varied between 1,380 and 1,400°C, the average grain size remained unchanged.

### TABLE 1

| Specimen No. | Compositions (in mol%) of semiconductive ceramic | | | | Average grain size in $\mu$m |
|---|---|---|---|---|---|
| | SrO | CaO | $TiO_2$ | $Nb_2O_5$ | |
| 11* | 49.99 | — | 49.99 | 0.02 | 6.8 |
| 13* | 50.30 | — | 49.65 | 0.05 | 3.3 |
| 14 | 50.23 | — | 49.72 | 0.05 | 7.4 |
| 16 | 49.87 | — | 50.08 | 0.05 | 22 |
| 21* | 50.15 | — | 49.65 | 0.20 | 3.4 |
| 22 | 50.08 | — | 49.72 | 0.20 | 7.7 |
| 24 | 49.80 | — | 50.00 | 0.20 | 30 |
| 25 | 49.75 | — | 50.05 | 0.20 | 24 |
| 27 | 49.57 | — | 50.23 | 0.20 | 7.5 |
| 28* | 49.50 | — | 50.30 | 0.20 | 4.2 |
| 31 | 49.75 | — | 49.95 | 0.30 | 24 |
| 34 | 49.47 | — | 50.23 | 0.30 | 6.3 |
| 35* | 49.40 | — | 50.30 | 0.30 | 3.7 |
| 44* | 49.60 | — | 50.00 | 0.40 | 4.7 |
| 65 | 47.25 | 2.5 | 50.05 | 0.20 | 23 |

4

TABLE 1 (continued)

| Specimen No. | Compositions (in mol%) of semiconductive ceramic | | | | Average grain size in $\mu$m |
|---|---|---|---|---|---|
| | SrO | CaO | $TiO_2$ | $Nb_2O_5$ | |
| 81* | 44.99 | 5.0 | 49.99 | 0.02 | 6.1 |
| 86 | 44.87 | 5.0 | 50.08 | 0.05 | 19 |
| 91* | 45.15 | 5.0 | 49.65 | 0.20 | 3.2 |
| 92 | 45.08 | 5.0 | 49.72 | 0.20 | 6.9 |
| 95 | 44.75 | 5.0 | 50.05 | 0.20 | 21 |
| 96 | 44.70 | 5.0 | 50.10 | 0.20 | 15 |
| 97 | 44.57 | 5.0 | 50.23 | 0.20 | 7.0 |
| 98* | 44.50 | 5.0 | 50.30 | 0.20 | 3.8 |
| 101 | 44.75 | 5.0 | 49.95 | 0.30 | 20 |
| 104 | 44.47 | 5.0 | 50.23 | 0.30 | 6.9 |
| 105* | 44.40 | 5.0 | 50.30 | 0.30 | 3.6 |
| 114* | 44.70 | 5.0 | 50.00 | 0.40 | 4.4 |
| 134 | 39.80 | 10.0 | 50.00 | 0.20 | 23 |
| 135 | 39.75 | 10.0 | 50.05 | 0.20 | 18 |
| 154 | 34.80 | 14.8 | 50.00 | 0.20 | 17 |
| 155 | 34.75 | 14.8 | 50.05 | 0.20 | 12 |
| 171* | 32.49 | 17.5 | 49.99 | 0.02 | 3.8 |
| 176 | 32.37 | 17.5 | 50.08 | 0.05 | 10 |
| 184 | 32.30 | 17.5 | 50.00 | 0.20 | 12 |
| 185 | 32.75 | 17.5 | 50.05 | 0.20 | 7.2 |
| 191 | 32.25 | 17.5 | 49.95 | 0.30 | 8.6 |
| 204* | 32.20 | 17.5 | 49.90 | 0.40 | 2.8 |
| 224 | 27.20 | 22.6 | 50.00 | 0.20 | 6.1 |
| 254* | 25.00 | 25.0 | 50.00 | 0.20 | 4.2 |

\* specimens used for comparison.

Except the specimen Nos. 11 and 171, the specific resistance measured at 20°C with the In-Ga electrodes was between 0.2 and 0.5 ohm·cm. Specimen Nos. 11 and 171 showed high specific resistance of 3.5 and 8.5 ohm·cm, respectively, which means that the valance-controlled semi-conductive properties are not sufficient. The grain growth of specimen Nos. 44, 114 and 204 whose $Nb_2O_5$ contents were in excess of 0.30 mol% was inhibited, so that the average grain size was small and less than 5 $\mu$m.

Further, the grain growth of the specimen No. 13 whose SrO contents were in excess of 50.23 mol%, the specimen Nos. 35 and 105 whose SrO and optionally CaO contents were less than 49.47 mol%, the specimen Nos. 13, 21 and 91 whose $TiO_2$ contents were less than 49.72 mol%, the specimen Nos. 35, 98 and 105 whose $TiO_2$ contents were in excess of 50.23 mol% was inhibited, so that the average grain size was small and less than 5 $\mu$m.

The fact that the CaO contents in excess of 22.6 mol% are not applicable was proved by the specimen No. 254 whose grain size was less than 5 $\mu$m. Except the specimen Nos. 13, 21, 28, 35, 44, 91, 98, 105, 114, 171, 204 and 254, the average grain sizes were greater than 5 $\mu$m.

The semiconductive ceramic disks which had the average sizes greater than 12 $\mu$m were applied with a diffusing agent or composition in the paste form and were subjected to the heat-treatment at 1190°C for two hours, so that the dielectric layers were formed in the grain boundaries. In like manner, the semiconductor ceramic specimens which had the average grain size of less than 12 $\mu$m were applied to with a diffusing agent or composition in the form of paste and were subjected to the heat-treatment at 1050°C for two hours, so that the dielectric layers were formed in the grain boundaries. The diffusing agent or compostiion used was a five-constituent composition consisting of 54.6 mol% of $Bi_2O_3$, 29.4 mol% of $Cu_2O$, 1.0 mol% of $MnO_2$, 2.5 mol% of $B_2O_3$ and 12.5 mol% of $Li_2CO_3$. These constituents are all available in the market and of the special grade for tests. 1.2 mg of the diffusing agent or composition paste was applied to each specimen of 250 mg. Care was taken during thermal diffusion so that the diffusing agent or composition would not leave from the specimens by evaporation or diffusion. On both major surfaces of the grain boundary layer dielectric ceramic disks, Ag electrodes were formed by a pyrolytic process, whereby the capacitor elements were provided. The dielectric constant $\varepsilon_a$ and the dielectric loss tan $\delta$ were measured both at 1 kHz. The results were shown in TABLE 2.

TABLE 2

| Specimen No. | Composition of semiconductive ceramic (Specimen No.) | Capacitor characteristics | | | |
|---|---|---|---|---|---|
| | | $\varepsilon_a$ | tan $\delta$ | $V_b$ (V/mm) | Temperature coefficient of capacitance in % |
| 1011* | 11* | 7000 | 0.0200 | 3200 | 4.4 |
| 1013* | 13* | 3500 | 0.0064 | 4200 | 4.3 |
| 1014 | 14 | 6200 | 0.0055 | 3800 | 3.7 |
| 1016 | 16 | 47000 | 0.0069 | 1300 | 10.5 |
| 1021* | 21* | 3800 | 0.0060 | 4000 | 4.0 |
| 1022 | 22 | 7000 | 0.0057 | 3300 | 4.2 |
| 1024 | 24 | 67000 | 0.0056 | 520 | 12.3 |
| 1025 | 25 | 53000 | 0.0046 | 1100 | 10.3 |
| 1027 | 27 | 7500 | 0.0040 | 3100 | 4.2 |
| 1028* | 28* | 4400 | 0.0036 | 3700 | 3.4 |
| 1031 | 31 | 51000 | 0.0041 | 1200 | 10.1 |
| 1034 | 34 | 6000 | 0.0035 | 4000 | 3.2 |
| 1035* | 35* | 3900 | 0.0033 | 4000 | 3.3 |
| 1044* | 44* | 4800 | 0.0044 | 3400 | 3.0 |
| 1065 | 65 | 50000 | 0.0040 | 1300 | 10.1 |
| 1081* | 81* | 6000 | 0.0220 | 3200 | 3.8 |

6

TABLE 2 (continued)

| Specimen No. | Composition of semiconductive ceramic (Specimen No.) | Capacitor characteristics | | | |
|---|---|---|---|---|---|
| | | $\varepsilon_a$ | tan $\delta$ | $V_b$ (V/mm) | Temperature coefficient of capacitance in % |
| 1086 | 86 | 37000 | 0.0038 | 1450 | 9.8 |
| 1091* | 91* | 3700 | 0.0059 | 4000 | 3.7 |
| 1092 | 92 | 6800 | 0.0055 | 3300 | 3.9 |
| 1095 | 95 | 45000 | 0.0042 | 1400 | 10.1 |
| 1096 | 96 | 29000 | 0.0045 | 2100 | 8.0 |
| 1097 | 97 | 6500 | 0.0042 | 3500 | 3.8 |
| 1098* | 98* | 4500 | 0.0045 | 3900 | 3.6 |
| 1101 | 101 | 40000 | 0.0045 | 1400 | 10.0 |
| 1104 | 104 | 6600 | 0.0043 | 3600 | 2.9 |
| 1105* | 105* | 3800 | 0.0040 | 4300 | 3.0 |
| 1114* | 114* | 4500 | 0.0050 | 3800 | 2.7 |
| 1134 | 134 | 48000 | 0.0061 | 1250 | 9.2 |
| 1135 | 135 | 34000 | 0.0044 | 1500 | 8.2 |
| 1154 | 154 | 31000 | 0.0062 | 1600 | 7.9 |
| 1155 | 155 | 25000 | 0.0049 | 1700 | 5.5 |
| 1171* | 171* | 4000 | 0.0250 | 3200 | 2.9 |
| 1176 | 176 | 13000 | 0.0050 | 4100 | 2.0 |
| 1184 | 184 | 21000 | 0.0053 | 2700 | 4.4 |
| 1185 | 185 | 7000 | 0.0051 | 3500 | 1.6 |
| 1191 | 191 | 8800 | 0.0058 | 3400 | 1.5 |
| 1204* | 204* | 3200 | 0.0061 | 4400 | 1.2 |
| 1224 | 224 | 6400 | 0.0068 | 3600 | 2.7 |
| 1254* | 254* | 4700 | 0.0071 | 3900 | 3.3 |

* Specimens for the sake of comparison.

Specimen Nos. 1011, 1081 and 1171 had the dielectric loss tan $\delta$ in excess of 0.01, so that they have no practical value and consequently are excluded out of the present invention.

Specimen Nos. 1013, 1021, 1028, 1035, 1044, 1091, 1098, 1105, 1114, 1171, 1204 and 1254 had the dielectric constant $\varepsilon_a$ of less than 5,000 so that they have no practical value as a large-capacity capacitor and consequently are excluded out of the present invention. Specimen Nos. 1016, 1024, 1025, 1031, 1065, 1095 and 1101 showed the dielectric constant $\varepsilon_a$ of higher than 35,000, the dielectric loss tan $\delta$ of less than 0.01, the dielectric breakdown voltage $V_b$ of higher than 500 V/mm and the temperature coefficient of capacitance of less than $\pm20\%$ (YD rating) which are all satisfactory

7

in practical use. Specimen Nos. 1086, 1096, 1134, 1135, 1154 and 1155 showed the dielectric constant $\varepsilon_a$ of higher than 20,000, the dielectric loss tan $\delta$ of less than 0.01, the dielectric breakdown voltage $V_b$ of higher than 700 V/mm and the temperature coefficient of capacitance of less than $\pm 10\%$ (YB rating). The specimens 1014, 1022, 1027, 1034, 1092, 1097, 1104, 1176, 1184, 1185, 1191 and 1224 satisfied the YA ratings of the dielectric constant $\varepsilon_a$ of higher than 5,000, the dielectric loss tan $\delta$ of less than 0.01, the dielectric breakdown voltage $V_b$ of higher than 700 V/mm and the temperature coefficient of capacitance of less than $\pm 5\%$.

Example 2

Powders of $Bi_2O_3$, $Cu_2O$, $MnO_2$, $B_2O_3$ and $Li_2CO_3$, all of which are available in the market and of the special grade for testing purposes or the like, were proportioned as shown in TABLE 3, wet mixed and added with a suitable amount of terepentine oil or pine resin, whereby the diffusing agents or compositions in the form of paste were prepared.

TABLE 3

| Specimen No. | Compositions of diffusing agents in mol% | | | | | Capacitor characteristics | | | |
|---|---|---|---|---|---|---|---|---|---|
| | $Bi_2O_3$ | $Cu_2O$ | $MnO_2$ | $B_2O_3$ | $Li_2O$ | $\varepsilon_a$ | $\tan \delta$ | $V_b$ (V/mm) | Temperature coefficient of capacitance in % |
| 2622 | 54.6 | 29.4 | 1 | 2.5 | 12.5 | 53000 | 0.0046 | 1100 | +10 |
| 2625 | 49.7 | 26.8 | 1 | 2.5 | 20.0 | 56000 | 0.0051 | 700 | +8 |
| 2629 | 47.4 | 25.6 | 2 | 5.0 | 20.0 | 54000 | 0.0050 | 500 | +8 |
| 2646* | 44.2 | 23.8 | 2 | 5.0 | 25.0 | 55000 | 0.0055 | 400 | +7 |

* Specimen used for the sake of comparison.

**0 047 815**

Thus prepared diffusing pastes were applied to the disks, Specimen No. 25 shown in TABLE 1, which had the average grain size of 24 $\mu$m. The amount of the diffusing paste applied to each disk (250 mg) was 1.2 mg in terms of the oxide powder. The semiconductive ceramic disks were then heat-treated at 1190°C for two hours. Care was taken so that the applied diffusing agents or compositions would not leave the disks by evaporation, diffusion or melting. Ag electrodes were formed on both major surfaces of the grain boundary layer dielectric ceramic disks, whereby capacitor elements were prepared. The dielectric constant $\varepsilon_a$, the dielectric loss tan $\delta$, the dielectric breakdown voltage $V_b$ and the temperature coefficient of capacitance were measured at 1 kHz and at between 85°C and −25°C. The results were shown also in TABLE 3.

Except specimen No. 2646, the specimens satisfied the YD ratings of the dielectric constant $\varepsilon_a$ of higher than 35,000, the dielectric loss tan $\delta$ of less than 0.01, the dielectric breakdown voltage $V_b$ of higher than 500 V/mm and the temperature coefficient of capacitance of less than $\pm20\%$ or the YB rating of the dielectric constant $\varepsilon_a$ of higher than 20,000, the dielectric loss tan $\delta$ of less than 0.01, the dielectric breakdown voltage $V_b$ of higher than 700 V/mm (with exception of specimen No. 2629) and the temperature coefficient of capacitance of less than $\pm10\%$.

Example 3

Following the procedure of the EXAMPLE 2, paste-like diffusing agents or compositions were prepared and applied to the disks, specimen No. 191 shown in TABLE 1, whose average grain size was 8.6 $\mu$m. The applied amount was 1.2 mg in terms of an oxide powder for each disk of 250 mg. The disks were then heat-treated at 1050°C for two hours. Care was taken so that the applied diffusing agents or compositions would not leave the disks. Ag electrodes were attached to the both major surfaces of the grain boundary layer dielectric ceramic disks and following the procedure of EXAMPLE 2, the characteristics were measured. The results were shown in TABLE 4.

TABLE 4

| Specimen No. | Compositions of diffusing agents in mol% | | | | | Capacitor characteristics | | | |
|---|---|---|---|---|---|---|---|---|---|
| | $Bi_2O_3$ | $Cu_2O$ | $MnO_2$ | $B_2O_3$ | $Li_2O$ | $\varepsilon_a$ | $\tan\delta$ | $V_b$ (V/mm) | Temperature coefficient of capacitance in % |
| 5321* | 79.0 | 5.0 | 1.0 | 2.5 | 12.5 | 10200 | 0.0091 | 560 | +6.1 |
| 5322 | 74.0 | 10.0 | 1.0 | 2.5 | 12.5 | 10000 | 0.0063 | 950 | +3.3 |
| 5323 | 64.0 | 20.0 | 1.0 | 2.5 | 12.5 | 9500 | 0.0060 | 1800 | +2.0 |
| 5324 | 54.6 | 29.4 | 1.0 | 2.5 | 12.5 | 8800 | 0.0058 | 3400 | +1.5 |
| 5325 | 49.0 | 35 | 1.0 | 2.5 | 12.5 | 8200 | 0.0068 | 3600 | +1.3 |
| 5327 | 34.0 | 50 | 1.0 | 2.5 | 12.5 | 7800 | 0.0070 | 3800 | +1.0 |
| 5329 | 19.0 | 65 | 1.0 | 2.5 | 12.5 | 6700 | 0.0073 | 4000 | +0.7 |
| 5331 | 14.3 | 69.7 | 1.0 | 2.5 | 12.5 | 5200 | 0.0077 | 4100 | ±0.5 |
| 5332* | 10 | 74 | 1.0 | 2.5 | 12.5 | 4100 | 0.0081 | 4200 | ±0.5 |

* Specimens for the sake of comparison.

Except Specimens Nos. 5321 and 5332, the specimens showed the dielectric constant $\varepsilon_a$ higher than 5000, the dielectric loss tan $\delta$ of less than 0.01, the dielectric breakdown voltage $V_b$ of higher than 700 V/mm and the temperature coefficient of less than $\pm 5\%$. Thus they satisfied the YA rating.

Example 4

The constituents used in EXAMPLE 1 and $SiO_2$ powder, which is available in the market and of the special grade for testing purpose or the like, were proportioned as shown in TABLE 5 and following the procedure of EXAMPLE 1, the disks or "compacts" were formed. The disks were heat-treated in the air at 1000°C and then sintered at a predetermined temperature between 1390°C and 1330°C for four hours in the flow of the atmosphere consisting of 95% of $N_2$ and 5% of $H_2$, whereby the semiconductive ceramic disks about 12.5 mm in diameter and about 0.4 mm in thickness were obtained. Following the procedure of EXAMPLE 1, the average grain sizes were measured. The results are also shown in TABLE 5.

TABLE 5

| | Semiconductive Ceramic | | | | Capacitor characteristics | | | |
|---|---|---|---|---|---|---|---|---|
| | Semiconductive ceramic compositions | | | | | | | |
| Specimen No. | Major constituents (100 mol parts) | $SiO_2$ in mol parts | Sintering temperature (°C) | Average grain size in $\mu$ | $\varepsilon_a$ | tan $\delta$ | $V_b$ (V/mm) | Temperature coefficient of capacitance in % |
| 8511 | | — | 1390 | 24 | 53000 | 0.0046 | 1100 | 10.3 |
| 8512 | | 0.1 | 1390 | 21 | 47000 | 0.0044 | 1250 | 10.3 |
| 8521 | | 0.2 | 1390 | 18 | 38000 | 0.0043 | 1300 | 10.0 |
| 8522 | SrO 49.75 mol% | 0.2 | 1370 | 18 | 39000 | 0.0039 | 1350 | 10.0 |
| 8523 | $TiO_2$ 55.05 mol% | 0.2 | 1350 | 17.5 | 36000 | 0.0054 | 1200 | 10.0 |
| 8531 | | 0.5 | 1390 | 14 | 28000 | 0.0040 | 1800 | 8.3 |
| 8541 | $Nb_2O_5$ 0.20 mol% | 1.0 | 1390 | 10.1 | 17000 | 0.0041 | 2300 | 3.7 |
| 8542 | | 1.0 | 1360 | 10.0 | 18000 | 0.0038 | 2300 | 3.8 |
| 8543 | Total 100 mol% | 1.0 | 1340 | 9.3 | 13000 | 0.0049 | 2200 | 3.5 |
| 8551 | | 1.5 | 1390 | 7.6 | 7400 | 0.0043 | 3000 | 3.1 |
| 8561 | | 2.0 | 1390 | 5.4 | 5400 | 0.0047 | 3500 | 2.6 |
| 8571* | | 2.5 | 1390 | 4.7 | 4700 | 0.0050 | 4000 | 2.3 |
| 8811 | SrO 39.80 mol% | — | 1390 | 23 | 50000 | 0.0062 | 1200 | 9.5 |
| 8812 | | 0.1 | 1390 | 21 | 43000 | 0.0059 | 1300 | 9.2 |
| 8821 | CaO 10.00 mol% | 0.2 | 1390 | 17 | 33000 | 0.0056 | 1400 | 8.4 |
| 8831 | | 0.5 | 1390 | 13 | 25000 | 0.0055 | 1900 | 7.4 |
| 8832 | $TiO_2$ 50.00 mol% | 0.5 | 1360 | 13 | 27000 | 0.0050 | 1900 | 7.7 |
| 8841 | $Nb_2O_5$ 0.20 mol% | 1.0 | 1390 | 8.5 | 8700 | 0.0057 | 2600 | 3.5 |
| 8851 | | 1.5 | 1390 | 6.3 | 6200 | 0.0060 | 3200 | 2.8 |
| 8861 | Total 100 mol% | 2.0 | 1390 | 5.1 | 5200 | 0.0065 | 3600 | 2.2 |
| 8871* | | 2.5 | 1390 | 4.3 | 4500 | 0.0070 | 4100 | 1.8 |

* Specimens for the sake of comparison.

# O 047 815

The Specimen Nos. 8571 and 8871 had the $SiO_2$ constituent in excess of 2 mol parts based on 100 mol parts of the main constituents or composition (consisting three or four of SrO, CaO, $TiO_2$ and $Nb_2O_5$) so that the grain growth was inhibited and consequently they had the average grain size of less than 5 $\mu$m. The effect of the $SiO_2$ constituent for facilitating the sintering is clear from Specimen Nos. 8521, 8522 and 8523. That is, even when the sintering temperature was lowered from 1390°C to 1350°C, the average grain size remained almost unchanged. Specimen Nos. 8541, 8542 and 8543 containing 1 mol part of $SiO_2$ and Specimen Nos. 8831 and 8832 containing 0.5 mol parts of $SiO_2$ showed the same tendency.

Following the procedure of EXAMPLE 1, specimens whose average grain size was in excess of 12 $\mu$m were applied with the diffusion pastes and heat-treated at 1190°C for two hours. In like manner, the specimens whose average grain size was less than 12 $\mu$m were applied with the diffusing pastes and heat-treated at 1050°C for two hours. Also following the procedure of EXAMPLE 1, the grain boundary layer dielectric ceramic disk elements were formed with Ag electrodes and their characteristics were measured. The results are also shown in TABLE 5.

Except Specimen Nos. 8571 and 8871, all the specimens Nos. 8511, 8512, 8521, 8522, 8523, 8811 and 8812 satisfied the YD rating of the dielectric constant $\varepsilon_a$ of higher than 35,000, the dielectric loss tan $\delta$ of less than 0,01, the dielectric breakdown voltage $V_b$ of higher than 500 V/mm and the temperature coefficient of capacitance, of less than $\pm$20%. Especially Specimen Nos. 8531, 8811, 8812, 8821, 8831 and 8832 satisfied the YB rating of the dielectric constant $\varepsilon_a$ of higher than 20,000, the dielectric loss tan $\delta$ of less than 0.01, the dielectric breakdown voltage $V_b$ of higher than 700 V/mm and the temperature coefficient of capacitance of less than $\pm$10%. Furthermore, Specimen Nos. 8541, 8542, 8543, 8551, 8561, 8841, 8851 and 8861 satisfied the YA rating of the dielectric constant $\varepsilon_a$ of higher than 5000 the dielectric loss tan $\delta$ of less than 0.01, the dielectric breakdown voltage $V_b$ of higher than 700 V/mm and the temperature coefficient of less than $\pm$5%.

## Claim

1. A grain boundary layer dielectric ceramic composition comprising semiconductive ceramic grains having

a) a composition of 50.23 to 49.47 mol% of SrO, 49.72 to 50.23 mol% of $TiO_2$ and 0.05 to 0.3 mol% of $Nb_2O_5$, or

b) a composition of 50.23 to 49.47 mol% of SrO and CaO wherein the amount of CaO is below 22.6 mol%, 49.72 to 50.23 mol% $TiO_2$ and 0.05 to 0.3 mol% of $Nb_2O_5$, or

c) a composition as under b) and containing additionally $SiO_2$ in an amount of less than 2 mol parts per 100 mol parts of the composition according to b), substantially each of said grains being surrounded by grain boundary dielectric materials formed by grain boundary diffusion of a mixture on the basis of $Bi_2O_3$ and $Cu_2O_1$ characterized in that said mixture is a five component system on the basis of a first composition system comprising 90 to 14.3 mol% of $Bi_2O_3$ and 10 to 85.7 mol% $Cu_2O$, which first components are partially substituted by an effective amount of $MnO_2$ of less than 4 mol%, an effective amount of $B_2O_3$ of less than 6 mol%, and an effective amount of $Li_2O$ of less than 20 mol%, and further in that the mixture contains at least 14.3 mol% of $Bi_2O_3$ and at least 10 mol% of $Cu_2O$.

## Revendication

1. Composition de céramique à couche diélectrique de joint de grains comprenant des grains de céramique semi-conductrice ayant:

a) une composition de 50,23 à 49,47 mol.% de SrO, de 49,72 à 50,23 mol.% de $TiO_2$ et de 0,05 à 0,3 mol.% de $Nb_2O_5$, ou

b) une composition de 50,23 à 49,47 mol.% de SrO et CaO, la proportion de CaO étant inférieure à 22,6 mol.%, de 49,72 à 50,23 mol.% de $TiO_2$ et de 0,05 à 0,3 mol.% de $Nb_2O_5$, ou

c) une composition telle que définie sous b) et contenant en outre $SiO_2$ dand une proportion de moins de 2 parties molaires pour 100 parties molaires de la composition selon b), pratiquement chacun desdits grains étant entouré par des matériaux diélectriques de joint de grains formés par diffusion aux joints de grains d'un mélange à base de $Bi_2O_3$ et de $Cu_2O$, caractérisée par le fait que ledit mélange est un système à cinq constituants à base d'une première composition comprenant de 90 à 14,3 mol.% de $Bi_2O_3$ et de 10 à 85,7 mol.% de $Cu_2O$, ces premiers constituants étant partiellement remplacés par substitution d'une quantité efficace de $MnO_2$ inférieure à 4 mol.% d'une quantité efficace de $B_2O_3$ inférieure à 6 mol.%, et d'une quantité efficace de $Li_2O$ inférieure à 20 mol.%, et par le fait que le mélange contient au moins 14,3 mol.% de $Bi_2O_3$ et au moins 10 mol.% de $Cu_2O$.

**0 047 815**

**Patentansprüch**

1. Korngrenzschicht mit dielektrischer Keramik-Zusammensetzung, welche halbleitende Keramikkörner mit

a) einer Zusammensetzung von 50,23 bis 49,47 Mol-% SrO, 49,72 bis 50,23 Mol-% $TiO_2$ und 0,05 bis 0,3 Mol-% $Nb_2O_5$ oder

b) einer Zusammensetzung von 50,23 bis 49,47 Mol-% SrO und CaO, worin die Menge an CaO unterhalb von 22,6 Mol-% liegt, 49,72 bis 50,23 Mol-% $TiO_2$ und 0,05 bis 0,3 Mol-% $Nb_2O_5$ oder

c) einer Zusammensetzung wie unter b) und zusätzlich $SiO_2$ in einer Menge von weniger als 2 Mol-Teilen pro 100 Mol-Teilen der Zusammensetzung nach b) enthaltend, wobei im wesentlichen jedes der Körner von Korngrenzschicht-Dielektrikmaterialien umgeben ist, die durch Korngrenzschicht-Diffusion eines Gemisches auf der Basis von $Bi_2O_3$ und $Cu_2O$, gebildet sind, dadurch gekennzeichnet, daß das Gemisch ein FünfKomponenten-System auf der Basis einer ersten Zusammensetzung ist, die 90 bis 14,3 Mol-% $Bi_2O_3$ und 10 bis 85,7 Mol-% $Cu_2O$ enthält, wobei die ersten Komponenten teilweise durch eine wirksame Menge $MnO_2$ von weniger als 4 Mol-%, eine wirksame Menge $B_2O_3$ von weniger als 6 Mol-% und eine wirksame Menge $Li_2O$ von weniger als 20 Mol-% ersetzt sind, und ferner dadurch, daß das Gemisch mindestens 14,3 Mol-% $Bi_2O_3$ und mindestens 10 Mol-% $Cu_2O$ enthält.

15